# EUROPEAN PATENT APPLICATION

(11) **EP 2 008 975 A2**
(43) Date of publication of application: **31.12.2008**
(21) Application number: 08011034.9
(22) Date of filing: 18.06.2008
(51) Int. Cl.: C02F 3/30, C02F 3/12, C02F 103/20, C02F 101/16

(54) **A method for obtaining drinking water from a liquid fraction of human or animal faeces, a bioreactor unit, a storage tank, and a method for growing a bacterial culture for use in such a method**

(30) Priority: 18.06.2007 NL 1034002
(71) Applicant: Josab Nederland B.V., 1063 NV Amsterdam (NL)
(72) Inventor: Sundelin, Bo Staffan, 1063 NV Amsterdam (NL)
(74) Representative: Niestadt, Bart Jan

(57) **Abstract**

The invention provides a method for obtaining drinking water from a liquid fraction of human or animal faeces, comprising the purification of the liquid fraction using a biological filtration process. The process furthermore comprises a step of reducing the ammonia content of the liquid fraction. The step of reducing the ammonia content comprises the steps of: storing the liquid fraction in a storage tank prior to the biological filtration process, mixing the liquid fraction with porous granules in the storage tank to provide a mixture, with a bacterial culture being present on the porous granules, and aerating the mixture of the granules and the liquid fraction to stimulate the growth of bacteria on the granules for the purpose of effecting the decomposition of ammonia with the aid of the bacterial culture. The invention furthermore provides a bioreactor unit, a storage tank and a culturing process for use in a water-purification method as described above.

## Description

A method for obtaining drinking water from a liquid fraction of human or animal faeces, a bioreactor unit, a storage tank, and a method for growing a bacterial culture for use in such a method.

### DESCRIPTION

The invention relates to a method for obtaining drinking water from a liquid fraction of human or animal faeces comprising the purification of the liquid fraction using a biological filtering process. The method further relates to a bioreactor unit, a storage tank and a method for growing a bacterial culture for use in the aforementioned method.

Biological filtration processes for purifying contaminated water, water mixtures and other liquid fractions varying in nature are known per se. Also known are biological filtration processes with which the liquid fraction of human or animal faeces can be purified so that water is obtained that may be discharged in accordance with the environmental standards.

The availability of drinking water is not a matter of course all over the world. Two thirds of the overall area of the earth consists of water, and only 0.6% of all the water present on earth is drinkable. A large part of the available water is seawater, which is undrinkable. In fact, drinking seawater leads to dehydration because of the high salt content and the composition of the salt in seawater. Global water management, especially in dry areas and third-world countries, is a problem that has been attracting ever more attention in the past few years. Solutions to this problem often focus on purifying the available contaminated water.

Human and animal faeces have a relatively high water content. The aforementioned biological filtration methods make it possible to separate the water in manure from the solid fraction, and to purify the liquid water fraction so that it can be discharged in accordance with the existing environmental standards, without involving any risk for the groundwater. However, purifying this liquid fraction so that drinkable water is obtained is a much greater challenge. The main problem is the relatively high ammonia content of the liquid fraction of the faeces. The existing biological filtration processes prove to be insufficiently capable of reducing the ammonia content to such an extent that the purified water can be drunk. Alternative filtration processes are often too laborious or cost-intensive to make obtaining drinking water from faeces worthwhile.

Another, practical problem is that large amounts of animal manure, which could be used for the purification, are to be found at farms. The primary object of cattle farms is the production of agricultural products such as milk, eggs, meat, cheese and the like. These farms are usually not equipped for the installation of large purification plants. It is of old customary to use the animal manure produced by cattle to manure the soil to make it fertile for, for example, the cultivation of maize, which can be used as animal feed. An average herd will however produce more manure than is needed to fertilise the soil.

One of the objects of the present invention is therefore to provide a method for purifying the liquid fraction of human or animal faeces so that drinking water can be obtained from it.

Another object of the present invention is to provide a possibility of increasing the reusability of cattle manure.

A further object of the present invention is to provide a simple purification method that can be used all over the world to make drinking water available.

These and other objects are achieved according to the invention because there is provided a method for obtaining drinking water from a liquid fraction of human or animal faeces comprising the purification of the liquid fraction using a biological filtration process, further comprising a step of reducing the ammonia content of the liquid fraction, which step comprises the steps of storing the liquid fraction in a storage tank prior to the biological filtration process, mixing the liquid fraction with porous granules in the storage tank to provide a mixture, wherein a bacterial culture is present on the porous granules, and aerating the mixture of the granules and the liquid fraction to stimulate the growth of bacteria on the granules for effecting decomposition of ammonia by means of the bacterial culture.

The invention is based on the insight that farmers usually store cattle manure in storage tanks for a relatively long time, in order to process it at a later stage. Most farms have a liquid manure pit for storing animal manure. Nowadays it is also customary to separate the solid fraction from the liquid fraction and to store the liquid fraction separately for processing at a later stage. Some farms moreover have biological filtration processes that enable them to purify the water from the liquid fraction sufficiently so as to be able to discharge it to the groundwater.

The inventors realised that a relatively small adjustment of the storage capacity for manure of farms will make them suitable for use in the biological filtration process for reducing the ammonia content of the liquid fraction. Bacteria that naturally convert ammonia into nitrates and nitrites, and bacteria that in turn naturally convert those nitrates and nitrites into nitrogen gas already reside naturally in faeces, but not in sufficient quantities to allow this process to proceed effectively. With the method according to the invention the growth of these bacteria in the storage tank is stimulated so that the bacterial culture present can be made large enough to ensure that this process can proceed effectively, and can substantially reduce the ammonia content of the liquid fraction. A sufficiently large area on which the bacteria can grow is required for the growth of the bacteria in the bacterial culture, and a constant supply of air is needed for the aerobic bacteria in the bacterial culture to ensure favourable growth conditions. To this end the invention makes use of porous granules, the effective area of the granules being very large in relation to the other dimensions of the granules as a result of the porosity. The porous granules provide the area that is needed for effective bacterial growth.

Because the liquid fraction remains in the storage tank for some time before being processed, the bacterial culture stimulated in the storage tank can substantially reduce the ammonia content in an efficient manner. After the ammonia content has been reduced, a further biological filtration process can be carried out, for example a biological filtration process according to the state of the art and as for example described in European patent No. EP 1 235 750, for the further purification of the liquid fraction for the purpose of obtaining drinking water. An additional advantage is that the biological filtration process need not necessarily take place in the vicinity of the storage tank. Storage tanks can for example optionally be installed at farms or other collection points of human or animal faeces, so that the liquid fraction can after storage be transported to a central collection point for the further biological filtration process to obtain drinking water.

The method according to the invention can also be used in sewage treatment plants, by separating the faeces from other residual waste in the sewage water and subsequently separating the liquid fraction of the faeces from the solid fraction and storing the liquid fraction according to the invention.

According to a preferred embodiment the porous granules are contained in a bioreactor unit installed in the storage tank. This presents the advantage that it is not necessary to replace the existing storage capacity for the liquid fraction of for example animal manure at farms by a storage tank according to the invention. A bioreactor unit can be installed in and connected directly to the existing storage tank of for example a cattle farm.

Implementation may then be achieved, according to an embodiment by for example mixing the liquid fraction with the porous granules during the liquid fraction's storage in the storage tank by pumping the liquid fraction into the bioreactor unit. The bioreactor unit can then also be separately aerated to effect the purification process. The bioreactor unit may be in the storage tank, but it may also be externally attached to the storage tank, with the liquid fraction for example being continuously pumped from the storage tank into the bioreactor unit and being circulated back to the storage tank. An advantage of the latter embodiment is that the bioreactor unit is always readily accessible for maintenance. An advantage of installing the bioreactor in the storage tank, on the contrary, is that this takes up less space and that the system is easier to install because no system need be installed to transport the liquid fraction to the bioreactor unit.

According to a preferred embodiment, prior to the step of mixing the liquid fraction with the porous granules, the porous granules are subjected to a culturing process to grow the bacterial culture on the porous granules. If the culturing process is omitted it will take some time for the bacterial culture in the liquid fraction in the storage tank and present on the porous granules to be large enough to allow the ammonia-decomposition process to proceed efficiently. By subjecting the porous granules to a culturing process to grow the bacterial culture prior to the mixing of the liquid fraction with the porous granules (instead of a natural growing process in the storage tank) the time needed to make the filtration process operational can be substantially shortened.

According to a further embodiment a sample of the liquid fraction of the faeces to be processed is mixed with the porous granules during the culturing process to gear the bacterial culture to be grown to the faeces to be processed. The composition of the bacterial culture occurring naturally in faeces depends on a number of factors, for example the food consumed by the human or animal organism that produced the faeces. The composition of the bacterial culture will thus depend on for example the farm from which the faeces is obtained. It is therefore preferable to use a sample of the liquid fraction of the faeces to be processed, geared to the farm, to grow the bacterial culture on the porous granules. The culturing process will take about two weeks, depending on the conditions, after which the porous granules can be introduced into the storage tank or into the bioreactor unit in order to implement the method according to the invention.

According to a further embodiment the biological decomposition of ammonia is effected by means of at least one biological process selected from a group comprising an aerobic biological process and an anaerobic biological process. The aerobic biological process can for example be effected by using bacteria of the nitrosomonas family, while the anaerobic process can be effected by using bacteria of the nitrobacter family. The aerobic process will ensure that ammonia is converted into nitrates and nitrites, while the anaerobic process will subsequently ensure that the nitrates and nitrites are decomposed to release nitrogen gas.

According to a further embodiment of the method, the liquid fraction can be stored for a time span ranging between one week and three months. Storing the liquid fraction for a time span of one month will already suffice to reduce the ammonia content of the liquid fraction by 80%. After two months' storage of the liquid fraction the ammonia content will be reduced by 96%, and after three months' storage by more than 99%. Different factors and conditions of the situation in which the method is used will influence the efficiency with which the purification process proceeds.

The porous granules that are suitable for use in a method according to the invention may have been selected from a group comprising granules of options of claim 10. It is also possible to use other types of granules, the main selection criterion being the ratio between the effective area of the granules and the dimensions of the granules. For the method according to the invention it is essential that the effective area for bacterial growth is large enough to accommodate a bacterial culture large enough to contribute towards the purification process. If the effective area of the employed granules is too small, the purification process will proceed too slowly, and the storage capacity will have to be very great so as to be able to store the liquid fraction long enough to ensure its purification. In a method according to the invention the porous granules may for example have a particle size with an average diameter ranging between 10 mm and 30 mm. Other suitable granules may of course also be used, providing they meet the aforementioned conditions for providing a relatively large effective area. If the granules are however large enough, for example having a diameter in the specified range, they will not remain in the liquid fraction when it is removed from the storage tank, but the granules can be simply separated from the liquid fraction when the storage tank is emptied.

According to a second aspect, the invention provides a bioreactor unit for use in a method as described above, the bioreactor unit comprising a housing for accommodating porous granules, means for mixing the liquid fraction with the porous granules and means for aerating a mixture of the porous granules with the liquid fraction to stimulate bacterial growth in a bacterial culture present on the granules, for biologically decomposing of ammonia in the liquid fraction.

The devices for mixing the liquid fraction with the porous granules may for example comprise a pump for pumping the liquid fraction from the storage tank into the bioreactor unit. The pump may also be a submerged pump that is fixed to the bioreactor unit so that the bioreactor unit can in its entirety be submerged in the liquid fraction contained in the storage tank.

According to a third aspect, the invention provides a storage tank provided with a bioreactor unit as described above for carrying out a method according to the invention as described above.

According to a fourth aspect thereof, the invention further provides a method for growing a bacterial culture on porous granules, for use in a method as described above, comprising the steps of mixing the porous granules with a sample of a liquid fraction of human or animal faeces and aerating the porous granules and the liquid fraction to grow the bacterial culture on the porous granules.

The invention will be further described below with reference to preferred embodiments thereof that are not intended to be restrictive, with reference to the enclosed drawings, in which:
figure 1 is a schematic representation of a method according to the invention;
figure 2 schematically illustrates a system with which the method according to the invention is implemented, comprising a storage tank and a bioreactor unit according to the invention;
figure 3 discloses a bioreactor unit according to the present invention;
figure 4 illustrates a culturing process according to the invention.

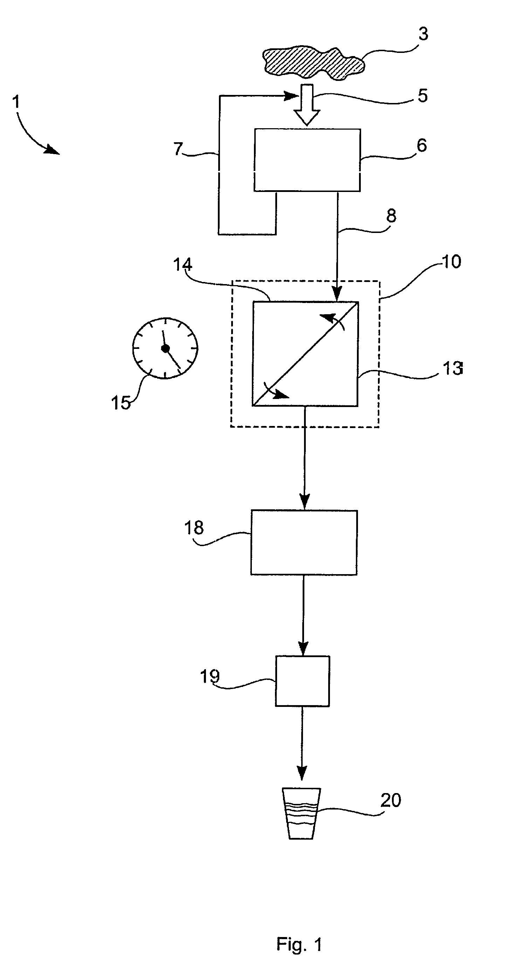

Figure 1 is a schematic representation of a method according to the invention, schematically indicated by reference number 1. For the application of the method, faeces 3 are introduced into the process (schematically indicated by arrow 5), and in step 6 the liquid fraction of faeces 3 is separated from the solid fraction. Solid fraction 7 can be discharged or be processed in a different way, but solid fraction 7 can also be reintroduced as schematically indicated in figure 1. Liquid fraction 8 is subsequently stored in a storage tank schematically indicated by reference number 10. The facilities needed to separate liquid fraction 8 from solid fraction 7 and a storage tank for the liquid fraction will already be present at many cattle farms. The advantage of separating the liquid fraction and the solid fraction is that the weight of the manure is largely determined by the weight of the liquid fraction, and the liquid fraction can be stored separately so that a smaller storage volume is needed. The solid fraction has a relatively low weight and can be easily processed further or be transported and processed some distance away. Many alternatives for processing the solid fraction are already available, and known to a person skilled in the art.

In the storage tank schematically indicated by dotted line 10 are porous granules on which is a bacterial culture. The porous granules have a relatively large effective area in relation to their dimensions so that the porous granules can accommodate a relatively large quantity of bacteria, and the porous granules hence constitute a suitable substrate for accommodating and growing a large bacterial culture. Several alternatives to the porous granules are suitable and commercially available, such as known per se to a person skilled in the art in the light of the given criterion. For a practical application, the use of vulcanised rock granules, such as the commercially available mineral AqualiteTM, is for example ideally suitable, but also conceivable are other suitable granules having for example a porous structure or a relatively large effective area. The granules may consist of zeolite granules, montmorillonite granules, porous ceramic granules or other suitable granules.

In storage tank 10 containing the porous granules in which liquid fraction 8 is stored, liquid fraction 8 will in step 14 mix with the porous granules. At the same time storage tank 10 is in step 13 aerated to initiate an aerobic decomposition process of the ammonia content of liquid fraction 8. Responsible for this aerobic decomposition process are bacteria of the nitrosomonas family, which convert the ammonia into nitrates and nitrites. The nitrates and nitrites thus obtained are converted into, inter alia, nitrogen gases by other bacteria belonging to the nitrobacter family in an anaerobic process. The ammonia content of the liquid fraction is in this manner efficiently reduced.

The ammonia-decomposition process however takes quite some time. To effect the decomposition of 80% of the ammonia contained in the liquid fraction, the liquid fraction must be stored in the storage tank for about a month, depending on the size of the bacterial culture (the quantity of porous granules on which the bacteria are accommodated), the efficiency of the aeration, the storage temperature, etc. A substantial reduction of 96% of the ammonia content of liquid fraction 8 can be achieved in storage for about two months, and after three months' storage even more than 99% of the ammonia originally contained in the liquid fraction will have disappeared. The storage time is in figure 1 schematically indicated by clock 15.

After the liquid fraction has been stored for quite some time the ammonia will to a large extent have disappeared from liquid fraction 8. Further processing may now proceed as follows. In step 18 the liquid fraction obtained after storage is further biologically filtered, and can for example be passed through various aerobic and anaerobic biological filters, subjected to UV-radiation treatment to kill bacteria, optionally heated, etc. Depending on the desired degree of purification, various steps in the process can optionally be added or omitted. For example, a reverse osmosis treatment (step 19) can be carried out to obtain very pure drinking water. The drinking water ultimately obtained can also be enhanced with desired minerals (not shown). The purification process thus obtained provides water that has been purified to such an extent that it can be drunk without any risk, as indicated by beaker 20.

Biological filtration process 18 and reverse osmosis 19 need not necessarily take place in the immediate vicinity of storage tank 10, but may take place at some distance from it. Storage tank 10 and the facilities for separating liquid fraction 8 from solid fraction 7 of faeces 3 may for example be present at a farm, with the fraction drained after storage being transported to a central purification plant for the execution of purification steps 18 and 19.

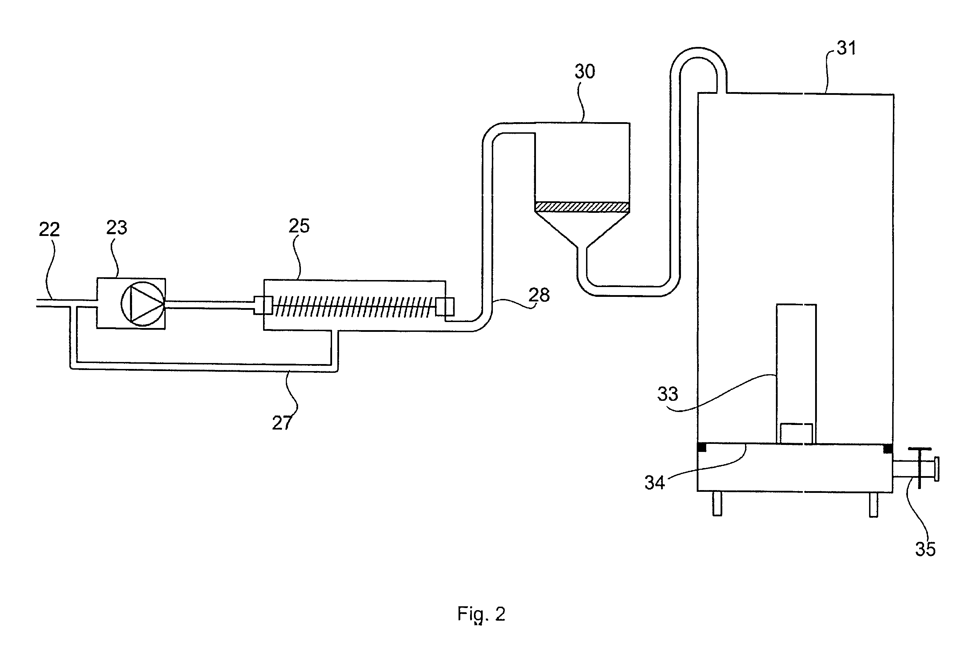

Figure 2 schematically illustrates a system with which step 6 of figure 1 and steps 13 and 14, which take place in storage tank 10 in figure 1, can be carried out. The system may for example be installed at a cattle farm, or it may form part of a larger system in the vicinity of for example a sewage treatment plant.

Via pipe 22 and pump 23 the unseparated manure or faeces is/are pumped to a decanting centrifuge 25, where the solid fraction is separated from the liquid fraction. The solid fraction is optionally recycled via pipe 27 to inlet pipe 22, but may also be collected and further processed. The liquid fraction is transported via pipe 28 to a filter, 30, where the liquid fraction is further stripped of any solid particles remaining in the liquid fraction. Figure 2 shows a filtration unit, 30, but also conceivable is for example a sedimentation tank in which the liquid fraction remains for a short time (for example one day). The liquid fraction is subsequently transported to storage tank 31. Storage tank 31 is a standard tank for storing the liquid fraction of manure. This storage tank may for example be fitted with a level-indicator tube so that the liquid level in the storage tank can be constantly monitored.

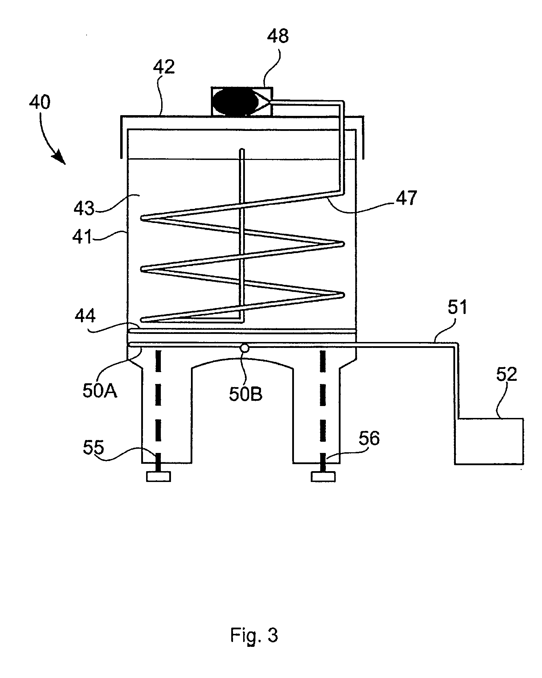

Storage tank 31 may contain porous granules (not shown), but it is also possible for a bioreactor unit, 33, according to the invention to be installed in storage tank 31. Bioreactor unit 33 will be described in greater detail below, with reference to figure 3. Bioreactor unit 33 in figure 3 may for example be placed on a grid at some distance above the base of storage tank 31, so that the risk of any remaining solid particles being pumped inside when the liquid fraction is taken from storage tank 31 into bioreactor unit 33 is further reduced. This grid 34 is optional, and bioreactor unit 33 may optionally also be placed on the base of storage tank 31.

The liquid fraction remains in storage tank 31 for some months, for example for a time span ranging between one week and three months. Good results are achieved with storage for two months, because a storage tank for the liquid fraction of an amount of manure that is produced at a farm in two months will be relatively acceptable in terms of size, while the greater part by far of the ammonia originally present in the liquid fraction can moreover be decomposed in two months' storage according to the present invention. After a sufficient length of time in storage tank 31 the liquid fraction can be drained via tapping point 35, for example in order to be transported to a central point for further processing, for the execution of a standard biological filtration process according to the state of the art. The biological filtration process after storage may of course also take place in the immediate vicinity of the storage tank, depending on what is desired and required.

Figure 3 shows a bioreactor unit, 40, according to the invention. The bioreactor unit comprises a housing, 41, and a lid or seal, 42. Inside housing 41 are porous granules indicated by reference number 43, which are however not physically indicated in the drawing for the sake of the figure's clarity, and so as to be able to indicate other elements of the bioreactor unit, such as pipe 47.

The granules have an average diameter in the range of 10-30 millimetres, and the total volume for storage of the granules in the bioreactor unit may for example be in the order of magnitude of 100 litres, but this may be freely chosen by a person skilled in the art, depending on the conditions, such as the amount of liquid fraction to be purified. The granules lie on a grid, 44, with a grid size that is at least smaller than the average diameter of the granules, so that the granules cannot fall through it.

A pipe, 47, is connected to a submerged pump, 48, placed at the top of the bioreactor unit. Submerged pump 48 may optionally be on a different part of the bioreactor unit, or it may be an external or a different pump with which the liquid fraction can be pumped from the storage tank into the bioreactor unit. Pipe 47 distributes the liquid fraction pumped up throughout the interior of the entire bioreactor unit in the vicinity of the porous granules, via a multitude of discharge openings present in pipe 47. Pump 48 and pipe 47 enable a continuous supply of fresh liquid fraction to the bioreactor unit, and a good distribution thereof, so that the process can proceed efficiently. The liquid fraction can for example leave the bioreactor unit via an outlet (not shown) or overflow opening.

At the bottom of the bioreactor unit is an air-distribution pipe, 50, for aerating the granules with the liquid fraction. In the present example air-distribution pipe 50 consists of two intersecting air pipes that are connected to one another, 50A and 50B, which are connected to a supply pipe, 51, which can be connected to a pump or a compressor (schematically indicated by reference number 52) for pumping air into air-distribution pipe 50. The bioreactor unit can be suitably installed in a storage tank for the liquid fraction of human or animal faeces with the aid of adjustable legs 55 and 56.

The porous granules that are used in the bioreactor unit or in the storage tank accommodate a substantial bacterial culture for converting ammonia into nitrates and nitrites, and converting the nitrates and nitrites into nitrogen gas. As already described above, two types of bacteria belonging to the nitrosomonas (for the aerobic decomposition process) and nitrobacter (for the anaerobic decomposition process) families are responsible for this. The bacteria will start to grow already when conditions suitable for growth are created, for example by introducing the porous granules into the storage tank and aerating the storage tank. However, to allow the process to proceed even more efficiently and to substantially shorten the start-up phase of the process' implementation, it is advantageous to subject the porous granules to a culturing process prior to the method according to the present invention.

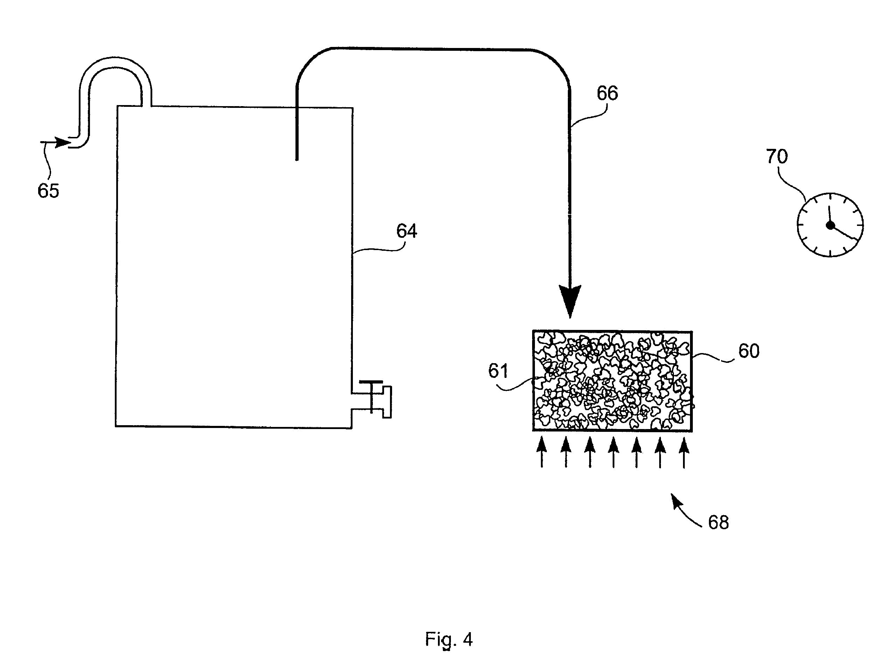

Figure 4 shows a culturing process according to the present invention for growing a suitable bacterial culture on porous granules 61 in figure 4. As the composition of for example farmers' manure depends on many local factors, such as the employed feed, the environment in which the cattle live, etc., it is a good idea to use a sample of the liquid fraction of the manure of the farm concerned to growth the bacteria on the porous granules. The bacteria needed to decompose ammonia occur naturally in the liquid fraction of the manure, but they are not naturally present in quantities large enough to allow the ammonia-decomposition process to proceed efficiently. The invention creates suitable conditions under which bacterial growth can take place so that the ammonia-decomposition process can proceed efficiently enough. Combined with the knowledge that the liquid fraction is often stored for some time before being processed further, this led to the solution according to the present invention.

To grow the suitable bacterial culture, a sample of the liquid fraction of the faeces to be processed is mixed with porous granules 61 on which the bacterial culture is to be grown. This sample and the porous granules are together kept in a cultivation tray, 60, which is provided with devices for aerating the cultivation tray. The aeration of the cultivation tray is schematically indicated by reference number 68. Growing the suitable bacterial culture takes several weeks, for example two weeks, as schematically indicated by clock 70. Reference number 65 indicates the introduction of the liquid fraction into storage tank 64.

The invention's operating conditions can be adjusted to the conditions as a person skilled in the art chooses. For example, one or more bioreactor units can be installed in the storage tank for the processing of the liquid fraction. Trial set-ups of the invention showed that installing a single bioreactor unit with a contents of 115 litres of porous AqualiteTM granules is enough to sufficiently reduce the ammonia content of 50 m3 of liquid fraction in two months' time.

The specific embodiments of the invention described above have been included only to illustrate and elucidate the invention for a person skilled in the art, and are not intended to be restrictive. The scope of the invention is limited only by the following claims.

## Claims

1. A method for obtaining drinking water from a liquid fraction of human or animal faeces, comprising the purification of the liquid fraction using a biological filtration process, further comprising a step of reducing the ammonia content of the liquid fraction, the step of reducing the ammonia content comprising the steps of:
storing the liquid fraction in a storage tank prior to the biological filtration process,
mixing the liquid fraction with porous granules in the storage tank to provide a mixture, wherein a bacterial culture is present on the porous granules, and
aerating the mixture of the granules and the liquid fraction to stimulate the growth of bacteria on the granules for effecting decomposition of ammonia by means of the bacterial culture.

2. A method according to claim 1, in which the porous granules are contained in a bioreactor unit placed in or near the storage tank.

3. A method according to claim 2, in which the liquid fraction is mixed with the porous granules by pumping the liquid fraction into the bioreactor unit during residence thereof in the storage tank.

4. A method according to claim 2 or claim 3, in which said step of aerating said mixture is aerated is implemented by aerating the bioreactor unit.

5. A method according to any one or more of the preceding claims, in which, prior to the step of mixing the liquid fraction with the porous granules, the porous granules undergo a culturing process for growing of the bacterial culture on the porous granules.

6. A method according to claim 5, wherein a sample of the liquid fraction of the faeces to be processed is mixed with the porous granules during the culturing process for matching said bacterial culture to be grown with said faeces to be processed.

7. A method according to any one of the preceding claims, in which the biological decomposition of ammonia is effected by means of at least one biological process selected from a group comprising an aerobe biological process and an anaerobe biological process.

8. A method according to any one of the preceding claims, in which the bacterial culture comprises at least one bacterium selected from the group comprising nitrosomonas and nitrobacter.

9. A method according to any one of the preceding claims, in which the step of the storage of the liquid fraction comprises storage for a duration ranging between 1 week and 3 months.

10. A method according to any one of the preceding claims, in which the porous granules have been selected from a group comprising granules of volcanic rock, zeolite granules or montmorillonite granules, porous ceramic granules.

11. A method according to any one of the preceding claims, in which the porous granules have a particle size with an average diameter ranging between 10 mm and 30 mm.

12. A method according to any one of the preceding claims, further comprising a step of subjecting the liquid fraction to a reverse osmosis step after the biological filtration process.

13. A bioreactor unit for use in a method according to any one of the preceding claims, comprising a housing to accommodate porous granules, means for mixing a liquid fraction with the porous granules and means for aerating a mixture of the porous granules with the liquid fraction to stimulate bacterial growth in a bacterial culture present on the granules, for biologically decomposing of ammonia in said liquid fraction.

14. A bioreactor unit according to claim 13, in which the means for mixing the liquid fraction with the porous granules comprises a pump for pumping the liquid fraction from a storage tank into the bioreactor unit.

15. A bioreactor unit according to claim 14, in which said pump is a submerged pump that is fixed to the bioreactor unit, and the bioreactor unit is arranged for placement in a storage tank for a liquid fraction of human or animal faeces.

16. A bioreactor unit according to any one of claims 13-15, in which the porous granules are selected from a group comprising granules of volcanic rock, zeolite granules or montmorillonite granules, porous ceramic granules.

17. A bioreactor unit according to any one of claims 13-16, in which the porous granules have a particle size with an average diameter ranging between 10 mm and 30 mm.

18. A storage tank fitted with a bioreactor unit according to any one of claims 13-17, for carrying out a method according to any one of claims 1-12.

19. A method for growing a bacterial culture on porous granules, for use in a method according to any one of claims 1-12, insofar as it is dependent on either one or both of claims 5 and 6, comprising the steps of:
mixing the porous granules with a sample of a liquid fraction of human or animal faeces;
aerating the porous granules and the liquid fraction for growing the bacterial culture on said porous granules.
